# EUROPEAN PATENT SPECIFICATION

(11) **EP 4 662 571 B1**
(45) Date of publication and mention of the grant of the patent: **04.02.2026**
(21) Application number: 24727779.1
(22) Date of filing: 08.05.2024
(51) Int. Cl.: G06F 17/18, G06N 3/02, G06N 20/10, H04L 9/40

(54) **FILTERING ENDURING ANOMALIES FROM RESULTS OF ANOMALY DETECTION**
FILTERUNG VON ANHALTENDEN ANOMALIEN AUS ERGEBNISSEN DER ANOMALIEDETEKTION
FILTRAGE D'ANOMALIES DURABLES À PARTIR DE RÉSULTATS DE DÉTECTION D'ANOMALIE

(30) Priority: 01.06.2023 FI 20235614
(43) Date of publication of application: 17.12.2025
(73) Proprietor: Elisa Oyj, 00520 Helsinki (FI)
(72) Inventor: UURTIO, Viivi, 00520 Helsinki (FI)
(74) Representative: Laine IP Oy
(86) International application number: PCT/FI2024/050219
(87) International publication number: WO 2024/246413

(56) References cited:
- OWEZARSKI PHILIPPE OWE@LAAS FR: "A Near Real-Time Algorithm for Autonomous Identification and Characterization of Honeypot Attacks", PROCEEDINGS OF THE 2015 ACM SIGMOD INTERNATIONAL CONFERENCE ON MANAGEMENT OF DATA, SIGMOD '15, ACM PRESS, NEW YORK, NEW YORK, USA, 14 April 2015 (2015-04-14), pages 531 - 542, XP058508625, ISBN: 978-1-4503-2758-9, DOI: 10.1145/2714576.2714580
- CHEN ZHIYUAN ET AL: "Exploration of the effectiveness of expectation maximization algorithm for suspicious transaction detection in anti-money laundering", 2014 IEEE CONFERENCE ON OPEN SYSTEMS (ICOS), IEEE, 26 October 2014 (2014-10-26), pages 145 - 149, XP032736259, DOI: 10.1109/ICOS.2014.7042645
- WENKE LEE ET AL: "Real time data mining-based intrusion detection", DARPA INFORMATION SURVIVABILITY CONFERENCE & EXPOSITION II, 2001. DISC EX '01. PROCEEDINGS 12-14 JUNE 2001, PISCATAWAY, NJ, USA,IEEE, vol. 1, 12 June 2001 (2001-06-12), pages 89 - 100, XP010549112, ISBN: 978-0-7695-1212-9

## Description

### TECHNICAL FIELD

Various example embodiments relate to post-processing of anomaly detection results relating to operation of a target system.

### BACKGROUND

Anomaly detection (also referred to as outlier detection) is generally understood to refer to the identification of rare items, events or observations which deviate (significantly) from the majority of the data and do not conform to a well defined notion of normal or nominal behavior. Anomaly detection finds applications in many different application domains such as communications, automation, cyber security and machine vision. For example, anomaly detection schemes may be used for identifying, based on data outputted by a given technical system, when said technical system is not operating nominally and consequently may require corrective intervention.

However, not all anomalous behavior requires equal attention. The duration of a given anomaly is an important factor in determining how serious the anomaly is. In general, anomalies that occur for a short period of time may be considered less important to pay attention to compared to anomalies lasting for a longer time (so-called enduring anomalies). Thus, there is a need for detecting enduring anomalies in an efficient manner.

OWEZARSKI PHILIPPE: "A Near Real-Time Algorithm for Autonomous Identification and Characterization of Honeypot Attacks", PROCEEDINGS OF THE 2015 ACM SIGMOD INTERNATIONAL CONFERENCE ON MANAGEMENT OF DATA, SIGMOD '15, ACM PRESS, NEW YORK, NEW YORK, USA, 14 April 2015 (2015-04-14), pages 531-542, XP058508625, DOI: 10.1145/2714576.2714580, ISBN: 978-1-4503-2758-9 discloses an unsupervised algorithm (called UNADA for Unsupervised Network Anomaly Detection Algorithm) for identification and characterization of security related anomalies and attacks occurring in honeypots.

CHEN ZHIYUAN ET AL: "Exploration of the effectiveness of expectation maximization algorithm for suspicious transaction detection in anti-money laundering", 2014 IEEE CONFERENCE ON OPEN SYSTEMS (ICOS), IEEE, 26 October 2014 (2014-10-26), pages 145-149, XP032736259, DOI: 10.1109/ICOS.2014.7042645 discloses an algorithm employing Expectation Maximization (EM) for Anti-Money Laundering (AML). The algorithm exploits the advantages of EM for suspicious transaction detection.

WENKE LEE ET AL: "Real time data mining-based intrusion detection", DARPA INFORMATION SURVIVABILITY CONFERENCE & EXPOSITION II, 2001. DISC EX '01. PROCEEDINGS 12-14 JUNE 2001, PISCATAWAY, NJ, USA, IEEE, vol. 1, 12 June 2001 (2001-06-12), pages 89-100, XP010549112, ISBN: 978-0-7695-1212-9 discloses various solutions for real time data mining based intrusion detection systems (IDSs) used in a real time environment.

### SUMMARY

According to some aspects, there is provided the subject-matter of the independent claims. Some embodiments are defined in the dependent claims. The scope of protection sought for various embodiments of the invention is set out by the independent claims. The embodiments, examples and features, if any, described in this specification that do not fall under the scope of the independent claims are to be interpreted as examples useful for understanding various embodiments of the invention.

According to a first aspect of the present disclosure, there is provided a computer-implemented method comprising:
obtaining information on a plurality of anomaly events relating to operation of a target system being a communications network or a part thereof, wherein the information on the plurality of anomaly events comprises one or more time series of anomaly score data;
detecting segments satisfying one or more pre-defined criteria for anomalous operation from the one or more time series of anomaly score data, wherein the one or more pre-defined criteria are defined so as to exclude at least fully non-anomalous anomaly score data;
determining, for the detected segments, anomaly durations and standardized anomaly scores;
performing partition-based or density-based clustering in a two-dimensional space formed by the standardized anomaly scores and the anomaly durations so as to form *n* clusters, wherein *n* is a pre-defined positive integer equal to or larger than two;
identifying *m* smallest clusters of the *n* clusters, wherein *m* is a pre-defined positive integer smaller than *n;* and
performing at least one of:
   outputting information on the *m* smallest clusters; or
   causing adjusting of operation of the target system based on information on the *m* smallest clusters.

According to a second aspect of the present disclosure, there is provided an apparatus comprising means for performing the computer-implemented method according to the first aspect.

According to a third aspect of the present disclosure, there is provided a computer program which, when the computer program is executed by a computing device, causes the computing device to carry out the computer-implemented method according to the first aspect.

### BRIEF DESCRIPTION OF THE DRAWINGS

Figure 1 illustrates a system according to some embodiments;
Figures 2 to 3 illustrate processes according to some embodiments; and
Figure 4 illustrates an apparatus according to some embodiments.

### DETAILED DESCRIPTION OF SOME EMBODIMENTS

The following embodiments are only presented as examples. Although the specification may refer to "an", "one", or "some" embodiment(s) and/or example(s) in several locations of the text, this does not necessarily mean that each reference is made to the same embodiment(s) or example(s), or that a particular feature only applies to a single embodiment and/or example. The verbs "to comprise" and "to include" are used in this document as open limitations that neither exclude nor require the existence of also un-recited features. Single features of different embodiments and/or examples may also be combined to provide other embodiments and/or examples.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

Embodiments to be discussed below in detail provide an apparatus for post-processing time series of anomaly score data for detecting serious enduring anomalies. An enduring anomaly refers to an anomaly or irregularity that persists or remains present over an extended period of time. Unlike transient anomalies that occur temporarily and then return (automatically) to normal, enduring anomalies persist for a significant duration, making them more notable and requiring attention or investigation. In some embodiments, the apparatus may also be configured to perform the anomaly detection (e.g., matrix decomposition based anomaly detection) so as to derive the time series of anomaly score data. The embodiments provide at least the advantage that serious enduring anomalies can be detected from a time series of anomaly data in an efficient manner.

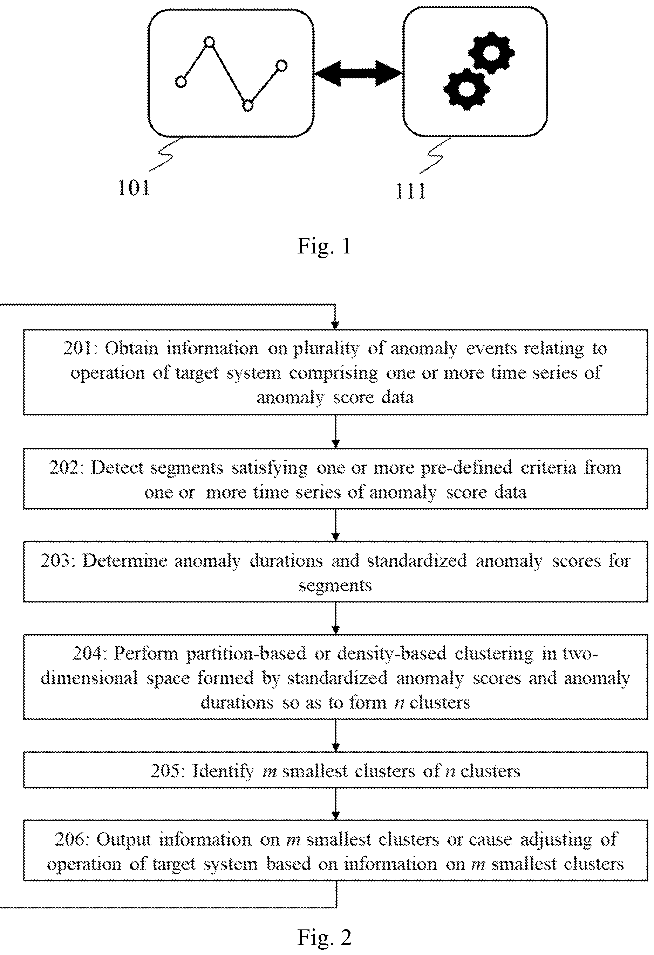

A general architecture of a system 100 to which embodiments may be applied is illustrated in Figure 1. Figure 1 illustrates a simplified system architecture only showing some elements and functional entities, all being logical units whose implementation may differ from what is shown. The connections shown in Figure 1 are logical connections; the actual physical connections may be different. It is apparent to a person skilled in the art that the system may also comprise other functions and structures.

The system 100 of Figure 1 comprises a target system 101 and an automation system 111. The target system 101 and the automation system 111 communicatively connected to each other via at least one wired and/or wireless communications link and/or at least one wired and/or wireless communications network. The automation system 111 is configured to implement analysis of results of measurements performed in the target system.

The target system 101 may define the space of objects (e.g., equipment and/or devices) that serve as the targets of the automation system 111. The target system 101 may comprise at least one or more computing devices. A computing device may be defined here as any device or equipment comprising at least one processor and at least one memory. At least some of the one or more computing devices are assumed to be capable of wired and/or wireless communication with the automation system 111. The one or more computing devices may comprise, e.g., one or more terminal or user devices, one or more sensor devices and/or one or more servers. Additionally, the target system 101 may comprise one or more pieces of equipment having one or more properties which are measurable via the one or more computing devices.

In some embodiments, the target system 101 may be or comprise a communications network or a part of a communications network. Said communications network may be a mobile or cellular communications network or a telecommunications network. Said mobile or cellular communications network or telecommunications network may comprise one or more access nodes (equally called base stations) serving, each, one or more (different) cells and/or one or more terminal device (equally called user devices).

In some embodiments, the target system 101 may be or comprise an industrial (automation) system or a part thereof. The industrial (automation) system may be defined as a system for running or controlling an industrial process. The industrial process may be any process involving chemical, physical, electrical or mechanical steps to aid in the manufacturing of an item or items.

At least some of the one or more computing devices of the target system 101 are assumed to be capable of performing measurements within the target system 101 via various measurement means (e.g., one or more sensors and/or one or more antennas) and of communicating the results of the measurements 121 to the automation system 111 (directly or via one or more other devices). Some non-limiting examples of measurements may comprise, e.g., radio measurements, infrared measurements, acoustic measurements, optical measurements, corona (discharge) detection, vibration measurements and sound level measurements. Measurements may performed periodically, regularly or continuously. The results of the measurements may be reported to the automation system 111 periodically, regularly or continuously (with the same or different schedule compared to the performing of the measurements).

In embodiments where the target system 101 is or comprises a communications network or a part of a communications network, the measurements performed in the target system 101 may comprise measurements of one or more performance metrics of the communications network. Each of the one or more performance metrics may relate to performance of a radio access network. In other words, each of the one or more performance metrics may relate, e.g., to performance of one or more terminal devices and/or one or more access nodes (or parts thereof such as distributed and/or centralized units) and/or one or more relay nodes. Depending on the embodiment, the one or more performance metrics may all relate to performance of same type of device (e.g., terminal devices) or of multiple different types of devices (e.g., terminal devices and access nodes). The one or more performance metrics may comprise, for example, one or more key performance indicators (KPIs) of the communications network 101 and/or one or more metrics measurable by one or more probes of the communications network 101. In some embodiments, the one or more performance metrics may be selected from the group consisting of: an assignment parameter, a circuit switched fall back parameter, a handover parameter, a short message/messaging service (SMS) parameter, a call parameter, a paging parameter, throughput, signal level, number of users (or user or terminal devices), a signal quality indicator (e.g., signal-to-noise ratio or signal-to-interference-plus-noise ratio), a timing advance. In some cases, multiple parameters of the same parameter type (e.g., multiple assignment parameters or multiple call parameters) may be included in the one or more performance metrics.

In embodiments where the target system 101 is a communications network (e.g., a telecommunications network), the measurements performed in the target system 101 may be selected, for example, from the group consisting of: a terminal device specific measurement, a cell-specific measurement, a cell type specific measurement, a base station specific measurement, a mobile switching center specific measurement, a roaming network specific measurement, a subscribed category specific measurement, a traffic category specific measurement, a connection release reason specific measurement. The measurements may relate one or more terminal devices, one or more cells, one or more base stations (i.e., one or more access nodes), one or more mobile switching centers, one or more roaming networks, one or more subscribed categories, one or more traffic categories and/or one or more connection release reasons.

In embodiments where the target system 101 is an industrial automation system or a part thereof, the measurements may comprise measurements performed using one or more sensors comprised in the industrial automation system. Said one or more sensors may comprise, for example, one or more temperature sensors, one or more pressure sensors, one or more microelectromechanical systems (MEMS) sensors, one or more torque sensors, one or more humidity sensors and/or one or more motion sensors.

The automation system 111 is configured to receive, continuously or periodically, results of measurements from the target system 101 and to perform analysis (e.g., anomaly detection) based on said results of measurements. The automation system 111 may comprise one or more computing devices.

In some embodiments, the automation system 111 may comprise at least one first computing device for performing anomaly detection (namely, for calculating anomaly scores) and at least one second computing device for (post-)processing the results of the anomaly detection for detecting enduring anomalies according to embodiments. In other embodiments, the automation system 111 may comprise at least one computing device for bother

In some embodiments, the automation system may employ machine-learning methods or models for performing (initial) anomaly detection (i.e., for calculating anomaly scores). In such embodiments, the automation system 111 may employ any machine-learning method, technique, model or algorithm. Some non-limiting examples of machine-learning methods usable by the machine-learning system 111 comprise supervised machine learning and/or reinforcement learning. Supervised machine learning techniques methods usable with embodiments may comprise, for example, support vector machines (SVMs), regression analysis (e.g., linear, logical or lasso regression), multiagent learning, naive Bayes, linear discriminant analysis, (random) decision tree -based learning, k-nearest neighbor algorithm, artificial neural networks (e.g., multilayer perceptron networks), similarity learning, statistical classification and/or boosting algorithm (e.g., xgboost).

Some embodiments may employ one or more neural networks for the machine learning. Neural networks (or specifically artificial neural networks) are computing systems comprised of highly interconnected "neurons" capable of information processing due to their dynamic state response to external inputs. In other words, an artificial neural network is an interconnected group of nodes (or "neurons"), where each connection between nodes is associated with a weight (i.e., a weighting factor) a value of which affects the strength of the signal at said connection and thus also the total output of the neural network. Sometimes, a bias term is also added to a total weighted sum of inputs at a node. Training of a neural network typically involves adjusting said weights (and possibly biases) so as to match a known output given a certain known input. The one or more neural networks employed in embodiments may comprise, e.g., one or more feedforward neural networks (e.g., a multilayer perceptron model) and/or one or more recurrent neural networks (e.g., long short term memory).

Figure 2 illustrates illustrates a process according to embodiments carried out by an automation system (e.g., the automation system 111 of Figure 1) or a part thereof for detecting enduring anomalies based on initial results of anomaly detection (i.e., anomaly score data). In the following, the entity performing the process is called simply an apparatus.

Referring to Figure 2, the apparatus initially obtains, in block 201, information on a plurality of anomaly events relating to operation of a target system. Said information on the plurality of anomaly event comprises at least one or more time series of anomaly score data. In some embodiments, the one or more time series of anomaly score data may comprise a plurality of time series of anomaly score data (one per anomaly event). In other words, each anomaly event may correspond to a time series of anomaly score data. The plurality of anomaly events may have been detected based on results of measurements performed in the target system by the apparatus itself or by another device communicatively connected to the apparatus. The target system and the measurements may be defined as described above in connection with Figure 1. A time series of anomaly score data (equally called an anomaly score time series) comprises, for each of a plurality of time data samples or points, at least one anomaly score. The time series of anomaly score data quantifies to which extent the operation of the target system (or a particular part thereof) at a given time can be considered anomalous (i.e., deviating from expected or normal operation of the target system).

An anomaly score may be defined, for example, as a real-numbered value being equal to or larger than a pre-defined lower limit (e.g., 0), where the pre-defined lower limit value corresponds to fully non-anomalous operation (of the target system) and larger anomaly scores correspond to more anomalous operation. The anomaly score may also be defined, in some such cases, to have a pre-defined upper limit (e.g., 1). It should, however, be emphasized that while the definition of the anomaly score given above is one typical way of defining an anomaly score, other definitions are also used (depending, e.g., on the application domain). In some such alternative definitions, smaller anomaly scores may correspond to more anomalous operation. The anomaly score may also be defined, in some alternative definitions, to possess, in addition to the zero value, only negative values or both positive and negative values.

In some embodiments, the one or more time series of anomaly score data may comprise or consist of one or more univariate time series and/or one or more multivariate time series.

A univariate time series of anomaly score data may comprise a set of anomaly score values corresponding, respectively, to a set of time data samples. In other words, the anomaly score may be provided per time instance (i.e., per time data sample).

A multivariate time series of anomaly data may comprise a set of sets of anomaly score values corresponding, respectively, to a set of time data samples. In this latter case, each anomaly score (i.e., each variable) in a set may indicate anomalousness of a particular (measured) metric or parameter of the target system at a particular time instance. In this case, the individual anomaly scores may be equally called anomaly score coefficients (as they may be combined to form the "total" anomaly score for a given time instance), as will be done in the following for clarity. For example, in the case where the target system is a cellular communications network, said measured metrics or parameters may comprise, for example, number of dropped calls and/or paging failures within a given time span.

In some embodiments, the one or more time series of anomaly score data may comprise or be provided with additional (auxiliary), time data sample specific information relating to the anomaly score data. Said additional information may be non-anomaly score data. Said additional information may comprise, for example, text data (e.g., string data). For example, in the case where the target system is a cellular communications network, said additional information may comprise information for locating the anomaly event in the cellular communications network.

In some embodiments, the apparatus may form one or more univariate time series of anomaly data based on one or more multivariate time series of anomaly data obtained in block 201. The combining may correspond to, e.g., taking a sum, a weighted sum, an average, a maximum or a median per time instance (i.e., per time data sample). The following steps of the process of Figure 2 may be carried out for the one or more univariate time series of anomaly data in such a case.

The apparatus detects, in block 202, segments satisfying one or more pre-defined criteria for anomalous operation from the one or more time series of anomaly score data. The one or more pre-defined criteria may specifically define, for univariate time series of anomaly score data, one or more criteria which each of the anomaly score value(s) of the segments need to satisfy (i.e., the one or more pre-defined criteria are applied per anomaly score value). Alternatively, the one or more pre-defined criteria may define, for multivariate time series of anomaly score data, one or more criteria which at least one of the anomaly score coefficient values per time data sample need to satisfy (i.e., the one or more pre-defined criteria are applied per anomaly score coefficient set). The one or more pre-defined criteria are defined so as to exclude at least fully non-anomalous anomaly score data (e.g., anomaly score of zero). In some embodiments, the one or more pre-defined criteria may be defined to exclude only fully non-anomalous anomaly score data (i.e., the detected segments may comprise any anomaly scores indicating at least somewhat anomalous operation). In other embodiments, the one or more pre-defined criteria may be defined to exclude both fully non-anomalous anomaly score data and slightly anomalous anomaly score data (i.e., the detected segments may comprise only anomaly scores indicating sufficiently anomalous operation). For example, the detecting in block 202 may comprise detecting segments corresponding to anomaly score(s) exceeding a pre-defined threshold (assuming that the anomaly score is defined so that larger values correspond to more anomalous operation) or to anomaly score(s) falling below a pre-defined threshold (assuming that the anomaly score is defined so that smaller values correspond to more anomalous operation). In either case, the pre-defined threshold may correspond, for example, to zero or other value defined to correspond to fully non-anomalous operation or to a value corresponding to a certain (low) pre-defined anomaly level.

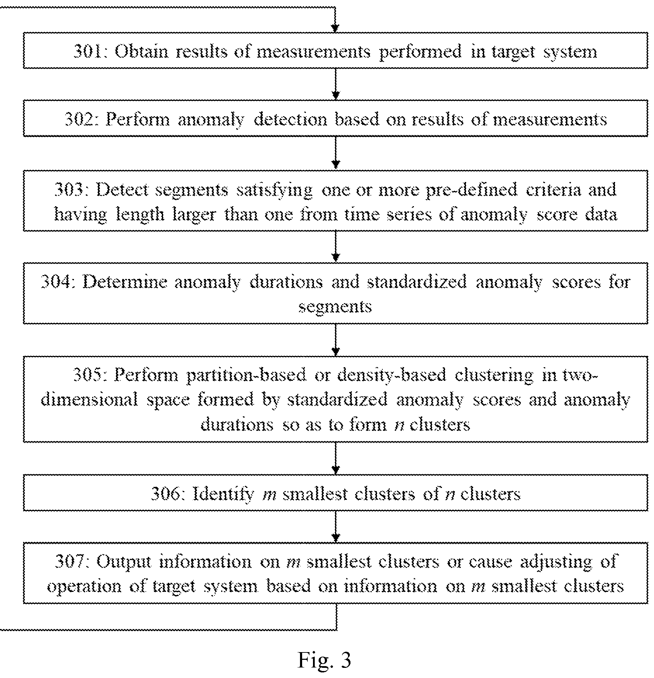

A given segment detected in block 202 may comprise one or more time data samples though, in some embodiments, segments with a unity length in time data samples (i.e., a length of one in time data samples) may be excluded in the detection, as will be described in detail in connection with Figure 3.

The apparatus determines, in block 203, anomaly durations and standardized anomaly scores for the segments. Namely, the apparatus may determine in block 203 an anomaly duration and a standardized anomaly score for each of the segments detected in block 202. The anomaly duration may be determined based on the number of anomaly score samples (for univariate time series of anomaly score data) or the number of anomaly score coefficient sets (for multivariate time series of anomaly score data) satisfying the one or more pre-defined criteria (e.g., the number of anomaly score samples having a non-zero value or the number of anomaly score coefficient sets having at least one non-zero value). The anomaly duration may be given, e.g., in second and/or minutes and/or hours and/or days or in number of samples. A standardized anomaly score for a segment may correspond here, for example, to an average anomaly score, a weighted average anomaly score, a maximum anomaly score or a median anomaly score calculated over the segment (in one or two dimensions for univariate and multivariate time series, respectively).

The apparatus performs, in block 204, partition-based or density-based clustering in a two-dimensional space formed by the standardized anomaly scores and the anomaly durations of the segments so as to form *n* clusters. Here, *n* is a pre-defined positive integer equal to or larger than two. In other words, the standardized anomaly scores and the durations of the segments define, respectively, two axes of the two-dimensional space.

In some embodiments, *n* may be equal to 2.

In some embodiments, the partition-based clustering performed in block 204 may be, for example, k-means clustering (e.g., with *k* = 2). In other embodiments, the density-based clustering performed in block 204 may be, for example, density-based spatial clustering of applications with noise (DBSCAN).

The apparatus identifies, in block 205, the *m* smallest clusters of the *n* clusters. Here, *m* is a pre-defined positive integer smaller than *n.* Typically, most of the detected anomaly events have a relatively low (average) anomaly score and last only for a short period of time. Therefore, it may be assumed that the largest cluster(s) correspond, in most cases, to such transient anomalies. Conversely, the smallest cluster(s) correspond more likely to enduring anomalies which may require corrective intervention and thus should be identified and analyzed. Thus, the *m* smallest clusters likely comprise most or all enduring anomaly events of the plurality of anomaly event from which information was obtained in block 201.

In some embodiments, *m* may be equal to 1.

In some embodiments, *n* may be equal to 2 and *m* may be equal to 1. In other words, the apparatus may perform, in block 204, partition-based or density-based clustering in a two-dimensional space formed by the standardized anomaly scores and the durations of the segments so as to form two clusters and may subsequently identify, in block 205, the smallest cluster of the two clusters.

The apparatus performs, in block 205, one or more actions comprising outputting information on the *m* smallest clusters and/or causing (or triggering) adjusting of operation of the target system based on information on the m smallest clusters. As described above, the information on the *m* smallest clusters outputted in block 205 may consist of or at least comprise information on enduring anomaly events. The information on the *m* smallest clusters may comprise at least at least one time series of anomaly score data associated with the *m* smallest clusters. Additionally or alternatively, the information on the *m* smallest clusters may comprise results of measurements in the target system relating to the *m* smallest clusters or at least information for identifying said results of measurements (e.g., in an external database). Additionally or alternatively, the information on the *m* smallest clusters may comprise the aforementioned additional time data sample specific information relating to the anomaly score data for the *m* smallest clusters.

In some embodiments, the outputting in block 205 may comprise outputting information on the *m* smallest clusters, directly or via one or more further devices, to a management device or node for remotely managing operation of the target system. When the target system is a cellular or mobile communications network, the management device or node may be, for example, a core network node. Subsequently, the management device or node may adjust operation of the target system based on the *m* smallest clusters to address any enduring anomalies. For example, the management device or node may adjust operation of and/or switch off (indefinitely or for a fixed duration) one or more devices or pieces of equipment of the target system. The adjusting of the operation may comprise, for example, adjusting one or more operating parameters of the one or more pieces of equipment or devices. Additionally or alternatively, the management device or node may inform a user (e.g., a maintenance person) of the management device or node of the enduring anomalies so that he/she may take actions for rectifying any possible issues associated with the enduring anomalies. In other words, the management device or node may output the information on the *m* smallest clusters via at least one user interface (e.g., a display of a user device).

In some embodiments, the outputting of the information on the *m* smallest clusters in block 205 may comprise outputting the information on the *m* smallest clusters via at least one user interface (e.g., a display comprised in or connected to the apparatus). In other words, the apparatus may cause displaying of the information on the *m* smallest clusters to a user so that he/she may take actions for rectifying any possible issues associated with the enduring anomalies.

The causing (or triggering) of the adjusting of the operation of the target system based on information on the *m* smallest clusters may be carried in block 205 so as to overcome at least some of the enduring anomalies. The adjusting of the operation of the target system may comprise adjusting of operation of one or more pieces of equipment of the target system. The adjusting of the operation of the one or more pieces of equipment may comprise, for example, adjusting one or more operational parameters of one or more pieces of equipment and/or disabling, fully or partly, one or more (likely) faulty pieces of equipment and/or one or more pieces of equipment affected by the one or more (likely) faulty pieces of equipment. When the target system is a communications network (e.g., a cellular network) or a part thereof, the adjusting of the operation of the one or more pieces of equipment may comprise, e.g., performing automated shutdown or rebooting of a physical or logical node (or at least one physical and/or logical node) of the communications network or adjusting operation of a physical or logical node (or at least one physical and/or logical node) of the communications network in some other way (e.g., adjusting an antenna tilt or a beamforming configuration).

Figure 3 illustrates illustrates another process according to embodiments carried out by an automation system (e.g., the automation system 111 of Figure 1) or a part thereof for detecting enduring anomalies (or equally enduring anomaly events). In the following, the entity performing the process is called simply an apparatus.

The process of Figure 3 corresponds to a large extent to the process of Figure 2. Any of the features discussed in connection with Figure 2 may apply, *mutatis mutandis,* in the context of Figure 3.

Referring to Figure 3, the apparatus initially obtains, in block 301, results of measurements performed in the target system. The target system and the measurements may be defined as described above in connection with Figure 1. The obtaining in block 301 may comprise receiving the results of the measurements from a (computing) device of the target system (e.g., via a wired or wireless communications network or link).

The apparatus performs, in block 302, anomaly detection based on the results of the measurements to detect the plurality of anomaly events and to generate one or more time series of anomaly score data. The one or more time series of anomaly score data may be defined as described in connection with block 201 of Figure 2. The apparatus may generate one time series of anomaly score data per anomaly event. Alternatively, the apparatus may generate one or more (combined) time series of anomaly score data each or some of which encompass multiple anomaly events. The anomaly detection may be, for example, matrix decomposition based anomaly detection (e.g., low-rank and sparse matrix decomposition).

The matrix decomposition based anomaly detection may be performed, for example, as described in the Finnish patent FI 20206329 A1. Thus, the matrix decomposition based anomaly detection may be performed, for example, as follows. It is assumed here that the results of the measurements of the target system were obtained in block 301 in the form of a first matrix. The first matrix may be accompanied with a property matrix comprising a combination of properties for each row of the first matrix. The properties may comprise at least one of time, location, device type, device identifier, logical element, event type or management system. If the target system is a communications system, the properties may comprise at least one of time, location, subscriber type, subscription type, network technology, cell type, cell identifier, device type, device identifier, logical element, event type, antenna type, roaming network or management system. The apparatus trains a matrix decomposition model with the first matrix to obtain a third matrix of normal or stable measurement results and a fourth matrix of anomalous or unstable measurement results. The apparatus receives a second matrix comprising second measurement results of the target system. Here, the second measurement results are later measurement results compared to the first measurement results. The second matrix may be accompanied with a property matrix comprising a combination of properties for each row of the second matrix. The apparatus selects from the third matrix a subset that matches the second matrix, e.g., based on respective combinations of properties. The apparatus subtracts the selected subset from the second matrix to obtain a fifth matrix. The apparatus may, in some embodiments, derive, based on the fifth matrix, an aggregated anomaly score for each row of the fifth matrix. Each row of the first, second, third and/or fourth matrices may relate to respective one or more properties (or parameter or metrics).

The apparatus detects, in block 303, segments satisfying one or more pre-defined criteria for anomalous operation and having a length larger than one (i.e., a duration longer than one time data sample) from the one or more time series of anomaly score data. Thus, in contrast to block 202 of Figure 2, the detected segments must not only satisfy the one or more pre-defined criteria but also have a non-unity length (in time data samples). This way the shortest segments (which obviously cannot correspond to enduring anomalies) are discarded even before the clustering stage. This serves to make the process (namely, the clustering stage) more computationally efficient. Here, the one or more pre-defined criteria may be defined as described in connection with block 202 of Figure 2.

The detection in block 303 may be carried out, for example, in two parts so that, first, a first set of segments satisfying the one or more pre-defined criteria are detected and then the first set of segments is filtered to eliminate any segments having a length of one (i.e., segments corresponding to singleton events) to form a second (reduced) set of segments.

The following steps 304 to 307 of the process of Figure 3 may be carried out as described above in connection with blocks 203 to 206 of Figure 2, respectively. Said actions are not described here again for brevity.

In some embodiments, only one of the two new features of Figure 3 relative to Figure 2 discussed in blocks 301, 302 and block 303 may be implemented.

In the following, one concrete example of the process according to embodiments is described. In this example, it is assumed that the anomaly score of zero corresponds to non-anomalous operation.

| **Filtering procedure** |
|---|
| **Input: X** ∈ 2612087 × 38 (2612087 observations associated with 38 counters) |
| **Output: X_{subset}** (enduring events) |
| 1: Select segments with anomaly score greater than 0: 33122 observations |
| 2: Remove singleton events: 16791 observations |
| 3: Compute anomaly durations from the number of non-zero entries and standardized anomaly scores |
| 4: Density-based clustering on anomaly score and duration: cluster 1: 2593 observations, cluster 2: 14198 observations |
| 5: **Return:** 2593 observations corresponding to enduring events with minimum anomaly score of 0.05 and duration of 25 occurrences out of 96 per 24-hour day |

In the above example, counters are metrics or parameters quantifying the operation of the target system (e.g., the number of dropped calls and/or paging failures within a given time span). Thus, the input **X** comprises values of 38 anomaly score coefficients relating to 38 different counters at 2 612 087 different time instances.

The blocks, related functions, and information exchanges described above by means of Figures 1 to 3 are in no absolute chronological order, and some of them may be performed simultaneously or in an order differing from the given one. Other functions can also be executed between them or within them, and other information may be sent, and/or other rules applied. Some of the blocks or part of the blocks or one or more pieces of information can also be left out or replaced by a corresponding block or part of the block or one or more pieces of information.

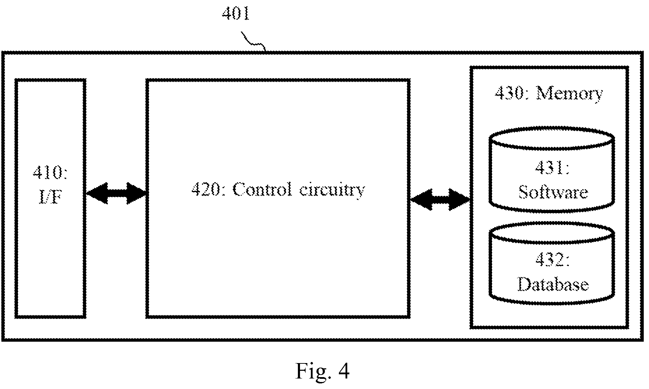

Figure 4 provides an apparatus 401 according to some embodiments. Specifically, Figure 4 may illustrate an apparatus configured to carry out at least the functions described above in connection with detecting enduring anomaly events based on results of anomaly detection. The apparatus 401 may be the automation system 111 of Figure 1 or a part thereof.

The apparatus 401 may comprise one or more control circuitry 420, such as at least one processor, and at least one memory 430, including one or more algorithms 431, such as a computer program code (software) wherein the at least one memory and the computer program code (software) are configured, with the at least one processor, to cause the apparatus to carry out any one of the exemplified functionalities of the monitoring system described above. Said at least one memory 430 may also comprise at least one database 432.

When the one or more control circuitry 420 comprises more than one processor, the apparatus 401 may be a distributed device wherein processing of tasks takes place in more than one physical unit. Each of the at least one processor may comprise one or more processor cores. A processing core may comprise, for example, a Cortex-A8 processing core manufactured by ARM Holdings or a Zen processing core designed by Advanced Micro Devices Corporation. The one or more control circuitry 420 may comprise at least one Qualcomm Snapdragon and/or Intel Atom processor. The one or more control circuitry 420 may comprise at least one application-specific integrated circuit (ASIC). The one or more control circuitry 420 may comprise at least one field-programmable gate array (FPGA).

Referring to Figure 4, the one or more control circuitry 420 of the apparatus 401 is configured to carry out functionalities described above by means of any of elements of Figure 2 and/or any of elements of Figure 3 using one or more individual circuitries. It is also feasible to use specific integrated circuits, such as ASIC (Application Specific Integrated Circuit) or other components and devices for implementing the functionalities in accordance with different embodiments.

Referring to Figure 4, the apparatus 401 may further comprise different interfaces 410 such as one or more communication interfaces comprising hardware and/or software for realizing communication connectivity according to one or more communication protocols. Specifically, the one or more communication interfaces 410 may comprise, for example, interfaces providing connection to a target system and one or more management device or nodes for managing the target system.

The apparatus 401 may comprise at least one user interface (UI). The at least one user interface may comprise at least one of a display, a keyboard, a touchscreen, a vibrator arranged to transmit a signal to a user by causing device 401 to vibrate, a speaker and a microphone. A user may be able to operate the apparatus 401 via the at least one user interface.

Referring to Figure 4, the memory 430 may be implemented using any suitable data storage technology, such as semiconductor based memory devices, flash memory, magnetic memory devices and systems, optical memory devices and systems, fixed memory and removable memory.

As used in this application, the term 'circuitry' may refer to one or more or all of the following: (a) hardware-only circuit implementations, such as implementations in only analog and/or digital circuitry, and (b) combinations of hardware circuits and software (and/or firmware), such as (as applicable): (i) a combination of analog and/or digital hardware circuit(s) with software/firmware and (ii) any portions of hardware processor(s) with software, including digital signal processor(s), software, and memory(ies) that work together to cause an apparatus, such as a terminal device or an access node, to perform various functions, and (c) hardware circuit(s) and processor(s), such as a microprocessor(s) or a portion of a microprocessor(s), that requires software (e.g. firmware) for operation, but the software may not be present when it is not needed for operation. This definition of 'circuitry' applies to all uses of this term in this application, including any claims. As a further example, as used in this application, the term 'circuitry' also covers an implementation of merely a hard-ware circuit or processor (or multiple processors) or a portion of a hardware circuit or processor and its (or their) accompanying software and/or firmware.

In an embodiment, at least some of the processes described in connection with Figures 1 to 3 may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, filter (low-pass, high-pass, bandpass and/or bandstop), sensor, circuitry, inverter, capacitor, inductor, resistor, operational amplifier, diode and transistor. In an embodiment, the at least one processor, the memory, and the computer program code form processing means or comprises one or more computer program code portions for carrying out one or more operations ac-cording to any one of the embodiments of Figures 1 to 3 or operations thereof. In some embodiments, at least some of the processes may be implemented using discrete components.

Embodiments as described may also be carried out, fully or at least in part, in the form of a computer process defined by a computer program or portions thereof. Embodiments of the methods described in connection with Figures 1 to 3 may be carried out by executing at least one portion of a computer program comprising corresponding instructions. The computer program may be provided as a computer readable medium comprising program instructions stored thereon or as a non-transitory computer readable medium comprising program instructions stored thereon. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, tele-communications signal, and software distribution package, for example. The computer program medium may be a non-transitory medium. Coding of software for carrying out the embodiments as shown and described is well within the scope of a person of ordinary skill in the art.

The term "non-transitory", as used herein, is a limitation of the medium itself (that is, tangible, not a signal) as opposed to a limitation on data storage persistency (for example, RAM vs. ROM).

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Even though embodiments have been described above with reference to examples according to the accompanying drawings, it is clear that the embodiments are not restricted thereto but can be modified in several ways within the scope of the appended claims. Therefore, all words and expressions should be interpreted broadly and they are intended to illustrate, not to restrict, the embodiment. It will be obvious to a person skilled in the art that, as technology advances, the inventive concept can be implemented in various ways. Further, it is clear to a person skilled in the art that the described embodiments may, but are not required to, be combined with other embodiments in various ways.

### INDUSTRIAL APPLICABILITY

At least some embodiments of the present invention find industrial application detection of enduring anomalies in operation of a target system such a communications network.

## Claims

1. A computer-implemented method comprising:
obtaining (201) information on a plurality of anomaly events relating to operation of a target system being a communications network or a part thereof, wherein the information on the plurality of anomaly events comprises one or more time series of anomaly score data;
detecting (202, 303) segments satisfying one or more pre-defined criteria for anomalous operation from the one or more time series of anomaly score data, wherein the one or more pre-defined criteria are defined so as to exclude at least fully non-anomalous anomaly score data;
determining (203, 304), for the detected segments, anomaly durations and standardized anomaly scores;
performing (204, 305) partition-based or density-based clustering in a two-dimensional space formed by the standardized anomaly scores and the anomaly durations so as to form *n* clusters, wherein *n* is a pre-defined positive integer equal to or larger than two;
identifying (205, 306) *m* smallest clusters of the *n* clusters, wherein *m* is a pre-defined positive integer smaller than n; and
performing (206, 307) at least one of:
outputting information on the *m* smallest clusters; or
causing adjusting of operation of the target system based on information on the *m* smallest clusters.

2. The computer-implemented method of claim 1, wherein the outputting comprises:
outputting the information on the *m* smallest clusters, directly or via one or more further devices, to a management device or node for remotely managing operation of the target system.

3. The computer-implemented method of claim 1 or 2, wherein the one or more pre-defined criteria are defined so as to exclude only fully non-anomalous anomaly score data.

4. The computer-implemented method according to any preceding claim, wherein n is equal to two.

5. The computer-implemented method according to any preceding claim, wherein *m* is equal to one.

6. The computer-implemented method according to any preceding claim, wherein the one or more time series of anomaly score data comprise one or more multivariate time series of anomaly score data, each multivariate time series comprising a set of sets of anomaly score coefficient values corresponding, respectively, to a set of time data samples, each anomaly score coefficient in a set indicating anomalousness of a particular metric or parameter of the target system at a particular time instance.

7. The computer-implemented method according to any preceding claim, further comprising:
excluding, in the detecting of the segments, any segments satisfying the one or more pre-defined criteria but having a length of one in time data samples.

8. The computer-implemented method according to any preceding claim, wherein the obtaining (201) of the information on the plurality of anomaly events comprises:
obtaining (301) results of measurements performed in the target system; and
performing (302) matrix decomposition based anomaly detection based on the results of the measurements to detect the plurality of anomaly events and to generate the one or more time series of anomaly score data.

9. The computer-implemented method according to any preceding claim, wherein the information on the *m* smallest clusters comprises:
at least one time series of anomaly score data associated with the *m* smallest clusters and/or
results of measurements in the target system relating to the *m* smallest clusters or at least information for identifying said results of measurements.

10. The computer-implemented method according to any preceding claim, wherein the standardized anomaly scores are average anomaly scores, weighted average anomaly scores, maximum anomaly scores or median anomaly scores calculated over the respective segments.

11. The computer-implemented method according to any preceding claim, wherein the causing adjusting of the operation of the target system based on the information on the *m* smallest clusters comprises:
causing adjusting operation of a physical or logical node of the communications network for overcoming anomalies identified by the *m* smallest clusters.

12. The computer-implemented method according to any preceding claim, wherein the target system is a cellular communications network or a part thereof.

13. The computer-implemented method of claim 12, wherein the outputting comprises:
outputting at least the information on the *m* smallest clusters to a core network node of the cellular communications network.

14. An apparatus (401) comprising means for performing the computer-implemented method according to any preceding claim.

15. A computer program which, when the computer program is executed by a computing device, causes the computing device to carry out the computer-implemented method of any of claims 1 to 13.

## Patentansprüche

1. Computerimplementiertes Verfahren, umfassend:
Erhalten (201) von Informationen über eine Vielzahl von Anomalieereignissen im Zusammenhang mit dem Betrieb eines Zielsystems, das ein Kommunikationsnetz oder ein Teil davon ist, wobei die Informationen über die Vielzahl von Anomalieereignissen eine oder mehrere Zeitreihen von Anomaliewertedaten umfassen;
Erkennen (202, 303) von Segmenten, die ein oder mehrere vordefinierte Kriterien für einen anomalen Betrieb erfüllen, aus der einen oder den mehreren Zeitreihen von Anomaliewertedaten, wobei das eine oder die mehreren vordefinierten Kriterien so definiert sind, dass mindestens vollständig nicht-anomale Anomaliewertedaten ausgeschlossen werden;
Bestimmen (203, 304), für die erkannten Segmente, von Anomaliedauern und standardisierten Anomaliewerten;
Durchführen (204, 305) von partitionsbasiertem oder dichtebasiertem Clustering in einem zweidimensionalen Raum, der durch die standardisierten Anomaliewerte und die Anomaliedauern gebildet wird, um *n* Cluster zu bilden, wobei n eine vordefinierte positive ganze Zahl ist, die gleich oder größer als zwei ist;
Identifizieren (205, 306) von *m* kleinsten Clustern der *n* Cluster, wobei m eine vordefinierte positive ganze Zahl kleiner als *n* ist; und
Durchführen (206, 307) mindestens eines von:
Ausgeben von Informationen über die m kleinsten Cluster; oder
Veranlassen einer Anpassung des Betriebs des Zielsystems auf der Grundlage von Informationen über die *m* kleinsten Cluster.

2. Computerimplementiertes Verfahren nach Anspruch 1, wobei das Ausgeben Folgendes umfasst:
Ausgeben von Informationen über die *m* kleinsten Cluster direkt oder über eine oder mehrere weitere Vorrichtungen an eine Managementvorrichtung oder einen Knoten, um den Betrieb des Zielsystems fernzusteuern.

3. Computerimplementiertes Verfahren nach Anspruch 1 oder 2, wobei das eine oder die mehreren vordefinierten Kriterien so definiert sind, dass nur vollständig nicht-anomale Anomaliewertedaten ausgeschlossen werden.

4. Computerimplementiertes Verfahren nach einem vorstehenden Anspruch, wobei n gleich zwei ist.

5. Computerimplementiertes Verfahren nach einem vorstehenden Anspruch, wobei m gleich eins ist.

6. Computerimplementiertes Verfahren nach einem vorstehenden Anspruch, wobei die eine oder die mehreren Zeitreihen von Anomaliewertedaten eine oder mehrere multivariate Zeitreihen von Anomaliewertedaten umfassen, wobei jede multivariate Zeitreihe einen Satz von Sätzen von Werten von Anomaliewertekoeffizienten umfasst, die jeweils einem Satz von Zeitdatenproben entsprechen, wobei jeder Anomaliewertekoeffizient in einem Satz die Anomalie einer bestimmten Metrik oder eines bestimmten Parameters des Zielsystems zu einem bestimmten Zeitpunkt angibt.

7. Computerimplementiertes Verfahren nach einem vorstehenden Anspruch, weiter umfassend:
Ausschließen, bei der Segmenterkennung, aller Segmente, die das eine oder die mehreren vordefinierten Kriterien erfüllen, jedoch eine Länge von eins in den Zeitdatenproben aufweisen.

8. Computerimplementiertes Verfahren nach einem vorstehenden Anspruch, wobei das Erhalten (201) der Informationen über die Vielzahl von Anomalieereignissen Folgendes umfasst:
Erhalten (301) von Ergebnissen von im Zielsystem durchgeführten Messungen; und
Durchführen (302) einer Matrixzerlegung auf der Grundlage von Anomalieerkennung auf der Grundlage der Messergebnisse, um die Vielzahl von Anomalieereignissen zu erkennen und die eine oder die mehreren Zeitreihen von Anomaliewertedaten zu generieren.

9. Computerimplementiertes Verfahren nach einem vorstehenden Anspruch, wobei die Informationen über die m kleinsten Cluster Folgendes umfassen:
mindestens eine Zeitreihe von Anomaliewertedaten, die mit den m kleinsten Clustern assoziiert sind, und/oder
Ergebnisse von Messungen im Zielsystem, die sich auf die m kleinsten Cluster beziehen, oder mindestens Informationen zum Identifizieren der Messergebnisse.

10. Computerimplementierte Verfahren nach einem vorstehenden Anspruch, wobei es sich bei den standardisierten Anomaliewerten um durchschnittliche Anomaliewerte, gewichtete durchschnittliche Anomaliewerte, maximale Anomaliewerte oder Median-Anomaliewerte handelt, die über die jeweiligen Segmente berechnet werden.

11. Computerimplementiertes Verfahren nach einem vorstehenden Anspruch, wobei das Veranlassen der Anpassung des Betriebs des Zielsystems auf der Grundlage der Informationen über die *m* kleinsten Cluster Folgendes umfasst:
Veranlassen einer Anpassung des Betriebs eines physischen oder logischen Knotens des Kommunikationsnetzes zur Überwindung von Anomalien, die durch die *m* kleinsten Cluster identifiziert wurden.

12. Computerimplementiertes Verfahren nach einem vorstehenden Anspruch, wobei das Zielsystem ein Mobilfunknetz oder ein Teil davon ist.

13. Computerimplementiertes Verfahren nach Anspruch 12, wobei das Ausgeben Folgendes umfasst:
Ausgeben mindestens der Informationen über die *m* kleinsten Cluster an einen Kernnetzknoten des Mobilfunknetzes.

14. Einrichtung (401), umfassend Mittel zum Durchführen des computerimplementierten Verfahrens nach einem vorstehenden Anspruch.

15. Computerprogramm, das, wenn das Computerprogramm von einer Computervorrichtung ausgeführt wird, die Computervorrichtung veranlasst, das computerimplementierte Verfahren eines der Ansprüche 1 bis 13 durchzuführen.

## Revendications

1. Procédé mis en œuvre par ordinateur comprenant :
l'obtention (201) d'informations sur une pluralité d'événements anormaux se rapportant au fonctionnement d'un système cible qui est un réseau de communication ou une partie de celui-ci, dans lequel les informations sur la pluralité d'événements anormaux comprennent une ou plusieurs séries chronologiques de données de score d'anomalie ;
la détection (202, 303) de segments satisfaisant un ou plusieurs critères prédéfinis pour un fonctionnement anormal à partir des une ou plusieurs séries chronologiques de données de score d'anomalie, dans lequel les un ou plusieurs critères prédéfinis sont définis de sorte à exclure au moins des données de score d'anomalie totalement non anormales ;
la détermination (203, 304), pour les segments détectés, de durées d'anomalie et de scores d'anomalie standardisés ;
la réalisation (204, 305) d'un regroupement basé sur la partition ou sur la densité dans un espace bidimensionnel formé par les scores d'anomalie standardisés et les durées d'anomalie de sorte à former *n* groupes, dans lequel *n* est un entier positif prédéfini égal ou supérieur à deux ;
l'identification (205, 306) des *m* plus petits groupes des *n* groupes, dans lequel *m* est un entier positif prédéfini inférieur à *n;* et
la réalisation (206, 307) d'au moins une parmi :
la sortie d'informations sur les *m* plus petits groupes ; ou
la provocation de l'ajustement du fonctionnement du système cible sur la base d'informations sur les *m* plus petits groupes.

2. Procédé mis en œuvre par ordinateur selon la revendication 1, dans lequel la sortie comprend :
la sortie des informations sur les *m* plus petits groupes, directement ou via un ou plusieurs dispositifs supplémentaires, à un dispositif ou nœud de gestion pour gérer à distance le fonctionnement du système cible.

3. Procédé mis en œuvre par ordinateur selon la revendication 1 ou 2, dans lequel les un ou plusieurs critères prédéfinis sont définis de sorte à exclure uniquement des données de score d'anomalie totalement non anormales.

4. Procédé mis en œuvre par ordinateur selon une quelconque revendication précédente, dans lequel n est égal à deux.

5. Procédé mis en œuvre par ordinateur selon une quelconque revendication précédente, dans lequel *m* est égal à un.

6. Procédé mis en œuvre par ordinateur selon une quelconque revendication précédente, dans lequel les une ou plusieurs séries chronologiques de données de score d'anomalie comprennent une ou plusieurs séries chronologiques multivariées de données de score d'anomalie, chaque série chronologique multivariée comprenant un ensemble d'ensembles de valeurs de coefficient de score d'anomalie correspondant respectivement à un ensemble d'échantillons de données temporelles, chaque coefficient de score d'anomalie dans un ensemble indiquant une anomalie d'une métrique particulière ou d'un paramètre particulier du système cible à un instant donné.

7. Procédé mis en œuvre par ordinateur selon une quelconque revendication précédente, comprenant en outre :
l'exclusion, lors de la détection des segments, de n'importe quel segment satisfaisant les un ou plusieurs critères prédéfinis mais présentant une longueur de un dans des échantillons de données temporelles.

8. Procédé mis en œuvre par ordinateur selon une quelconque revendication précédente, dans lequel l'obtention (201) des informations sur la pluralité d'événements anormaux comprend :
l'obtention (301) de résultats de mesures effectuées dans le système cible ; et
la réalisation (302) d'une détection d'anomalie basée sur la décomposition matricielle sur la base des résultats des mesures pour détecter la pluralité d'événements anormaux et générer les une ou plusieurs séries chronologiques de données de score d'anomalie.

9. Procédé mis en œuvre par ordinateur selon une quelconque revendication précédente, dans lequel les informations sur les m plus petits groupes comprennent :
au moins une série chronologique de données de score d'anomalie associée aux m plus petits groupes et/ou
résultats de mesures effectuées dans le système cible concernant les m plus petits groupes ou au moins des informations pour identifier lesdits résultats de mesures.

10. Procédé mis en œuvre par ordinateur selon une quelconque revendication précédente, dans lequel les scores d'anomalie standardisés sont des scores d'anomalie moyens, des scores d'anomalie moyens pondérés, des scores d'anomalie maximaux ou des scores d'anomalie médians calculés sur les segments respectifs.

11. Procédé mis en œuvre par ordinateur selon une quelconque revendication précédente, dans lequel la provocation de l'ajustement du fonctionnement du système cible sur la base des informations se rapportant aux *m* plus petits groupes comprend :
la provocation de l'ajustement du fonctionnement d'un nœud physique ou logique du réseau de communication pour surmonter des anomalies identifiées par les m plus petits groupes.

12. Procédé mis en œuvre par ordinateur selon une quelconque revendication précédente, dans lequel le système cible est un réseau de communications cellulaires ou une partie de celui-ci.

13. Procédé mis en œuvre par ordinateur selon la revendication 12, dans lequel la sortie comprend :
la fourniture d'au moins les informations sur les *m* plus petits groupes à un nœud du réseau central du réseau de communications cellulaires.

14. Appareil (401) comprenant des moyens pour réaliser le procédé mis en œuvre par ordinateur selon une quelconque revendication précédente.

15. Programme informatique qui, lorsque le programme informatique est exécuté par un dispositif informatique, amène le dispositif informatique à mettre en œuvre le procédé mis en œuvre par ordinateur selon l'une quelconque des revendications 1 à 13.
